# EUROPEAN PATENT APPLICATION

(11) **EP 3 477 479 A1**
(43) Date of publication of application: **01.05.2019**
(21) Application number: 17198503.9
(22) Date of filing: 26.10.2017
(51) Int. Cl.: G06F 11/14, G06F 11/34

(54) **ELECTRONIC DEVICE AND METHOD FOR CONTROLLING AN ELECTRONIC DEVICE**

(71) Applicant: Vestel Elektronik Sanayi ve Ticaret A.S., 45030 Manisa (TR)
(72) Inventor: ER, Alper Sait, 45030 Manisa (TR); YILDIZ, Kadir, 45030 Manisa (TR)
(74) Representative: Ascherl, Andreas

(57) **Abstract**

The present invention provides an electronic device (100, 200) for inspection by a user, the electronic device (100, 200) comprising an activity monitor (101, 201) configured to monitor user activity in the electronic device (100, 200) and output a respective activity signal (102, 202), and a control unit (103, 203) coupled to the activity monitor (101, 201) and configured to reset at least one setting (104, 204) of the electronic device (100, 200) to a factory default value (106, 206) if the activity signal (102, 202) signals no user activity for a predetermined amount of time. Further, the present invention provides a respective method for controlling an electronic device (100, 200).

## Description

### TECHNICAL FIELD

The invention relates to an electronic device for inspection by a user. Further the invention relates to a respective method for controlling an electronic device.

### BACKGROUND

Although applicable to any electronic device, the present invention will mainly be described in conjunction with mobile devices, like e.g. smartphones or tablet PCs.

Mobile electronic devices, like e.g. smartphones are usually displayed in stores in show rooms. In such show rooms users may inspect different smartphones prior to choosing a specific model. The users may not only visually inspect the smartphones. Instead, the users may also touch and use the smartphone. Using the smartphone may include changing settings of the smartphone, like e.g. the screen brightness, the volume and the like.

After a user inspects a smartphone, the smartphone is usually returned to the respective cradle for another user to inspect the respective smartphone.

However, if another user picks up the smartphone to inspect it, he will be presented with the smartphone as the last user left it. This means that the settings of the smartphone may be other settings than the factory default settings. Especially settings like e.g. a low brightness setting may lead a user that usually expects a smartphone with default settings to think that the smartphone has a low quality screen. A smartphone with unnoted modified settings may therefore discourage a user from buying a specific smartphone model.

Accordingly, there is a need for providing users with an improved experience while inspecting electronic devices, like e.g. smartphones.

### SUMMARY OF THE INVENTION

The present invention provides an electronic device with the features of claim 1 and a method for controlling an electronic device with the features of claim 8.

Accordingly, it is provided:
An electronic device for inspection by a user, the electronic device comprising an activity monitor configured to monitor user activity in the electronic device and output a respective activity signal, and a control unit coupled to the activity monitor and configured to reset at least one setting or all settings of the electronic device to a factory default value if the activity signal signals no user activity for a predetermined amount of time.

Further, it is provided:
A method for operating an electronic device, especially an electronic device according to the present invention, comprises monitoring user activity in the electronic device, and resetting at least one setting of the electronic device to a factory default value if no user activity is detected for a predetermined amount of time.

The present invention is based on the finding that a user may best experience and inspect an electronic device when the configuration of the electronic device is set as intended by the device manufacturer.

The present invention therefore provides the activity monitor that monitors user activity in the electronic device. The term "user activity" may refer to any action or activity that a user may perform in, on or with the electronic device. Such actions may e.g. comprise moving or touching the electronic device or providing user input to the electronic device. The activity signal comprises an information about detected user interaction. This means that the activity signal may e.g. be a binary signal, where a one may indicate user activity and a zero may indicate no user activity or vice versa. The activity signal may however also be any other type of signal, e.g. an analog signal, a digital signal or a flag or variable that comprises information about the type of detected user activity or the like.

The control unit is coupled to the activity monitor and receives the activity signal to determine if user activity happens. If the control unit determines that no user activity was present for a predetermined amount of time, the control unit may reset at least one setting or all settings of the mobile device to a factory default value. It is understood, that the electronic device or the control unit may comprise a memory that stores the default values for the settings.

The setting may e.g. comprise the brightness of a display of the electronic device or the volume. The default value may be a specific value or a functional value like e.g. an "auto" mode. The brightness of the display may e.g. be adjusted to a specific value. In "auto" mode, the brightness may however be adapted according to an intensity of ambient light.

In stores, where the electronic devices are arranged e.g. in cradles in show rooms, a user may inspect an electronic device and perform respective setting modifications and the like. Depending on the number of potential customers that are present in the show room, the time between a first user dropping the electronic device in the cradle and a next user picking up the electronic device may vary. The predetermined amount of time may therefore be a fixed or a configurable value. The predetermined amount of time may e.g. be between 1 and 30 seconds, especially 10 seconds or 20 seconds.

With the present invention every user may inspect the electronic device in its original condition, i.e. with factory default settings. The perception of the electronic device by the user is therefore not influenced by any setting a former user may have performed.

It is understood, that the control unit may e.g. comprise a firmware that performs the respective functions. As alternative, the control unit may be implemented as part of a firmware or operating software or as application that is executed by an operating system that is executed by a processor of the electronic device.

It is further understood, that the electronic device may be any type of electronic device, like e.g. a smartphone, a tablet PC, a portable computer, a TV set, an amplifier, a wireless speaker, a smartwatch or the like.

Further embodiments of the present invention are subject of the further subclaims and of the following description, referring to the drawings.

In an embodiment, the electronic device may comprise a show room activation input element coupled to the control unit. The control unit may be configured to perform the resetting of at least one setting or all settings of the electronic device to a factory default value only if the show room activation input element is activated.

The show room activation input element may be seen as a switch that triggers a show room mode in the electronic device. In the show room mode, the electronic device will perform the resetting of the internal setting of the electronic device after the predetermined amount of time, such that other users may experience the electronic device with its original configuration.

The show room activation input element being activated refers to the show room activation input element providing any type of indication to the control unit about whether the show room mode should be activated or not.

In another embodiment, the show room activation input element may comprise a user input and/or a password input field.

The show room activation input element may e.g. be implemented as an element of the user interface of the electronic device. Such an element may e.g. be a simple toggle button or sliding button. As alternative, a password may be required to set the electronic device into the show room mode and to deactivate the show room mode. This prevents a user from accidentally or willfully deactivating the show room mode in the show room or from activating the show room mode during normal use of the electronic device outside of a show room.

In a further embodiment, the show room activation input element may comprise a wireless transceiver, especially a WIFI transceiver and/or a Bluetooth transceiver. Further, the show room activation input element may be activated if a predetermined communication partner is available for communication via the wireless transceiver.

If the show room activation element is capable of performing communication with specific communication partners, the availability of a communication partner may activate the show room mode. If for example a WIFI access point with a specific SSID (network name) is within range of the wireless transceiver, the control unit may activate the show room mode. The same applies to Bluetooth or other communication systems, where the presence of a communication partner with a specific name or network address may activate the show room mode.

The communication partner may also be a network server with a specific server address. The electronic device may e.g. check the availability of the server via the WIFI network and then enter the show room mode if the server is available. A more sophisticated communication pattern may also be performed, where the electronic device asks the server whether it should enter the show room mode.

The presence of a respective communication partner alone may be enough for the electronic device to enter the show room mode. However, as additional measure, the control unit may prompt a user to confirm the activation of the show room mode, e.g. via a dialogue on a screen of the electronic device.

In an embodiment, the at least one setting or all settings of the electronic device may comprise a display brightness and/or a volume and/or an equalizer configuration and/or an activation state of a data interface, especially a wireless interface and/or wireless network information and/or wireless pairing information and/or a display resolution and/or a display size setting.

The display brightness refers to the brightness setting of the electronic device. The volume may refer either to the overall volume setting of the electronic device or to volume settings for single applications or groups of applications, like e.g. multimedia applications. The equalizer configuration influences the audio playback in the electronic device. The activation state of a data interface refers to the interface being activated or deactivated. For example a WIFI or Bluetooth interface of the electronic device may be activated or deactivated. The wireless pairing information refers to information about communication partners, e.g. WIFI network access points or Bluetooth devices. A user may e.g. couple an electronic device in a showroom with his own equipment, e.g. a smartphone or Bluetooth speaker. This coupling may be removed by resetting the settings in the electronic device. The display resolution and the display size setting refer to the number of pixels that the display shows and the size of icons and fonts on the display.

In another embodiment, the electronic device may comprise a content memory for user generated content. The control unit may be coupled to the content memory and may be configured to delete the content of the content memory when performing resetting at least one setting or all settings of the electronic device to a factory default value.

Modern electronic devices, like e.g. smartphones may allow users to create content, like e.g. images and videos. Thus user content is usually stored on the device. Other user content may e.g. comprise the account information of online accounts, e.g. for cloud storage services or the like. This type of content is usually confidential content and should not be passed to other users via a show room electronic device.

Therefore, the control unit may not only reset the settings but may also delete the user generated content in the electronic device.

In an embodiment, the electronic device may comprise a reset input. The control unit may be coupled to the reset input and may be configured to reset at least one setting or all settings of the electronic device to a factory default value on activation of the reset input.

The reset input allows a user to actively reset the electronic device to its factory defaults. This may also prevent the settings being still active if another user picks up the electronic device after a former user dropped it.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an electronic device according to the present invention;
Fig. 2 shows a block diagram of another embodiment of an electronic device according to the present invention; and
Fig. 3 shows a flow diagram of an embodiment of a method according to the present invention.

In the figures like reference signs denote like elements unless stated otherwise.

### DETAILED DESCRIPTION OF THE DRAWINGS

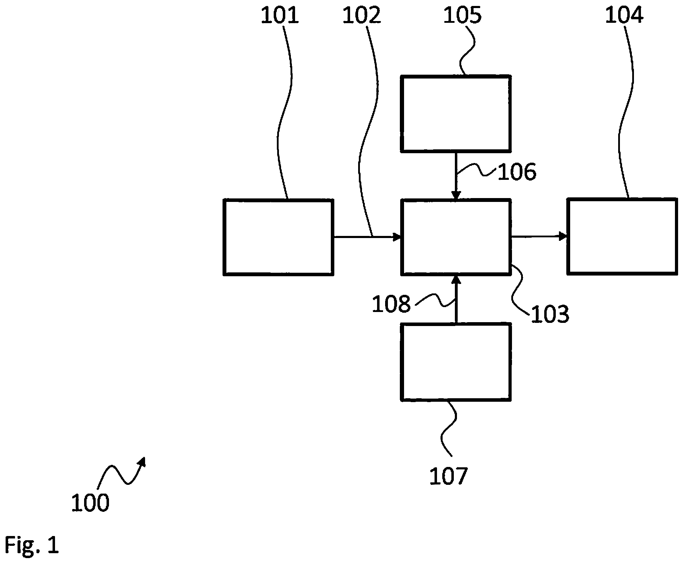

Fig. 1 shows a block diagram of an electronic device 100. The electronic device 100 comprises an activity monitor 101 that is coupled to a control unit 103. The control unit 103 influences a setting 104 of the electronic device 100. To this end the control unit 103 may e.g. be coupled to a setting memory (not explicitly shown). Such a setting memory may be a dedicated memory or may be part of an integrated memory of the control unit 103. The control unit 103 is further coupled to a counter 107 that provides a counter signal 108, and to a memory 105 that holds factory default values 106. Although only one setting 104 is shown, it is understood, that any number of settings, especially all settings of the electronic device 100 may be processed by the control unit 103.

The activity monitor 101 monitors user activity in the electronic device 100. User activity may be any interaction of a user with the electronic device 100, such as e.g. using buttons or a touchscreen of the electronic device 100 or simply moving the electronic device 100. The activity monitor 101 outputs a respective activity signal 102. The activity monitor 101 may e.g. change the state of the activity signal 102 to a positive state, while user activity is detected. The activity signal 102 may therefore e.g. be a binary signal. As alternative, the activity signal 102 may be a data signal, e.g. parallel or serial, or a variable or internal signal of the control unit 103 that provides additional information about the type of user interaction.

The control unit 103 monitors the amount of time that passes without any user interaction. To this end, the control unit 103 monitors the counter signal 108 provided by counter 107. If no user interaction is indicated by the activity signal 102 for more than a predetermined amount of time, the control unit 103 resets the setting 104 of the electronic device 100 to a factory default value 106 that is provided by the memory 105.

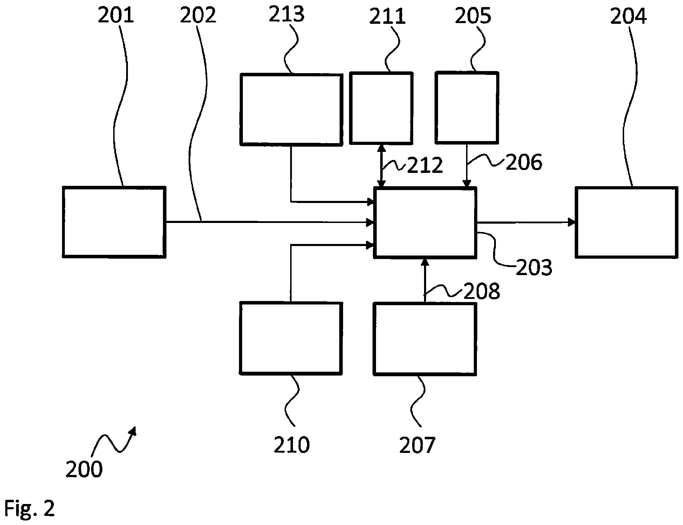

Fig. 2 shows a block diagram of an electronic device 200. The electronic device 200 is based on the electronic device 100. Therefore, the electronic device 200 also comprises an activity monitor 201 that is coupled to the control unit 203. The control unit 203 is further coupled to a memory 205 and a counter 207 and influences the setting 204. Again, the single setting 204 is just exemplarily shown and any number of settings may be modified by the control unit 203.

The above said regarding the common elements of the electronic device 100 and the electronic device 200 applies mutatis mutandis to the electronic device 200.

The electronic device 200 further comprises a show room activation input element 210, a content memory 211 and a reset input 213 that are coupled to the control unit 203.

The show room activation input element 210 serves for activating the show room mode of the control unit 203, i.e. the resetting of the setting 204 if no user interaction is detected for a predetermined amount of time. The show room activation input element 210 may e.g. comprise a user input and/or a password input field that may be manually activated by a user. As alternative or in addition, the show room activation input element 210 may comprise a wireless transceiver, especially a WIFI transceiver and/or a Bluetooth transceiver. The show room activation input element 210 may be activated if a predetermined communication partner is available for communication via the wireless transceiver.

The content memory 211 stores user generated content 212, like e.g. images, videos or audio recordings that may be created with the electronic device 200. Further possible user generated content 212 for example includes user account settings and the like. To remove such content for the next user, the control unit 203 may delete the content of the content memory 211 when performing resetting the setting 204.

The reset input 213 may be used by a user to actively initiate the resetting of the setting 204 and if applicable the removal of the user generated content 212. If the reset input 213 is triggered by a user, the control unit 203 will therefore reset the setting 204 to the respective factory default value 206.

It is understood, that a possible electronic device 200 may comprise only one or a selection of the show room activation input element 210, the content memory 211, and the reset input 213. Further, some or all elements of the electronic device 200 may be integrated into the control unit 203 as hardware, software or a combination of both.

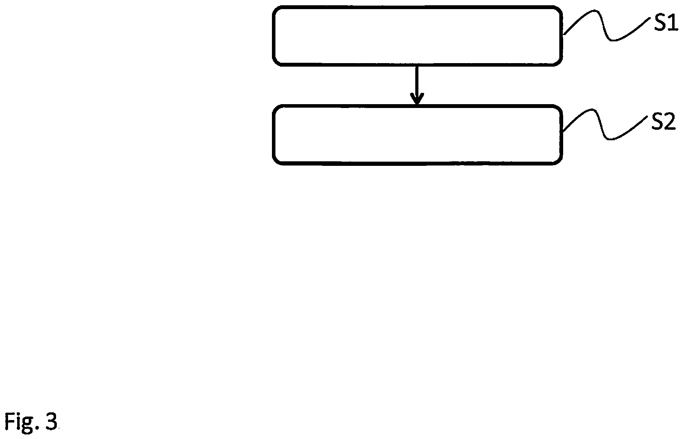

For sake of clarity in the following description of the method based Fig. 3 the reference signs used above in the description of apparatus based Figs. 1 - 2 will be maintained.

Fig. 3 shows a flow diagram of a method for operating an electronic device 100, 200, especially an electronic device 100, 200 according to the present invention.

The method comprises monitoring S1 user activity in the electronic device 100, 200, and resetting S2 at least one setting 104, 204 of the electronic device 100, 200 to a factory default value 106, 206 if no user activity is detected for a predetermined amount of time.

The at least one setting 104, 204 of the electronic device 100, 200 may e.g. comprise a display brightness and/or a volume and/or an equalizer configuration and/or an activation state of a data interface, especially a wireless interface and/or wireless network information and/or wireless pairing information and/or a display resolution and/or a display size setting.

Resetting of at least one setting 104, 204 of the electronic device 100, 200 to a factory default value 106, 206 may be performed if a show room activation input element 210 of the electronic device 100, 200 is activated. Such a show room activation input element 210 may comprise a user input and/or a password input field. In addition or as alternative, the show room activation input element 210 may comprise a wireless transceiver, especially a WIFI transceiver and/or a Bluetooth transceiver. The show room activation input element 210 may in this case be activated if a predetermined communication partner is available for communication via the wireless transceiver.

The method may in addition comprise deleting the content of a content memory 211 for user generated content 212 of the electronic device 100, 200 when performing resetting at least one setting 104, 204 of the electronic device 100, 200 to a factory default value 106, 206.

Further, resetting at least one setting 104, 204 of the electronic device 100, 200 to a factory default value 106, 206 may be performed on activation of a reset input 213 of the electronic device 100, 200.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides an electronic device 100, 200 for inspection by a user, the electronic device 100, 200 comprising an activity monitor 101, 201 configured to monitor user activity in the electronic device 100, 200 and output a respective activity signal 102, 202, and a control unit 103, 203 coupled to the activity monitor 101, 201 and configured to reset at least one setting 104, 204 of the electronic device 100, 200 to a factory default value 106, 206 if the activity signal 102, 202 does signal no user activity for a predetermined amount of time. Further, the present invention provides a respective method for controlling an electronic device 100, 200.

### List of reference signs

- 100, 200: electronic device
- 101, 201: activity monitor
- 102, 202: activity signal
- 103, 203: control unit
- 104,204: setting
- 105, 205: memory
- 106, 206: factory default value
- 107,207: counter
- 108, 208: counter signal

- 210: show room activation input element
- 211: content memory
- 212: user generated content
- 213: reset input

- S1, S2: method steps

## Claims

1. Electronic device (100, 200) for inspection by a user, the electronic device (100, 200) comprising:
an activity monitor (101, 201) configured to monitor user activity in the electronic device (100, 200) and to output a respective activity signal (102, 202), and
a control unit (103, 203) coupled to the activity monitor (101, 201) and configured to reset at least one setting (104, 204) of the electronic device (100, 200) to a factory default value (106, 206), if the activity signal (102, 202) signals no user activity for a predetermined amount of time.

2. Electronic device (100, 200) according to claim 1, comprising a show room activation input element (210) coupled to the control unit (103, 203), wherein the control unit (103, 203) is configured to perform the resetting of at least one setting (104, 204) of the electronic device (100, 200) to a factory default value (106, 206) if the show room activation input element (210) is activated.

3. Electronic device (100, 200) according to claim 2, wherein the show room activation input element (210) comprises a user input and/or a password input field.

4. Electronic device (100, 200) according to any one of claims 2 and 3, wherein the show room activation input element (210) comprises a wireless transceiver, especially a WIFI transceiver and/or a Bluetooth transceiver, and wherein the show room activation input element (210) is activated if a predetermined communication partner is available for communication via the wireless transceiver.

5. Electronic device (100, 200) according to any one of the preceding claims, wherein the at least one setting (104, 204) of the electronic device (100, 200) comprises a display brightness and/or a volume and/or an equalizer configuration and/or an activation state of a data interface, especially a wireless interface and/or wireless network information and/or wireless pairing information and/or a display resolution and/or a display size setting.

6. Electronic device (100, 200) according to any one of the preceding claims, comprising a content memory (211) for user generated content (212), wherein the control unit (103, 203) is coupled to the content memory (211) and is configured to delete the content of the content memory (211) when performing resetting at least one setting (104, 204) of the electronic device (100, 200) to a factory default value (106, 206).

7. Electronic device (100, 200) according to any one of the preceding claims, comprising a reset input (213), wherein the control unit (103, 203) is coupled to the reset input (213) and is configured to reset at least one setting (104, 204) of the electronic device (100, 200) to a factory default value (106, 206) on activation of the reset input (213).

8. Method for operating an electronic device (100, 200), especially an electronic device (100, 200) according to any one of the preceding claims, the method comprising:
monitoring (S1) user activity in the electronic device (100, 200), and
resetting (S2) at least one setting (104, 204) of the electronic device (100, 200) to a factory default value (106, 206) if no user activity is detected for a predetermined amount of time.

9. Method according to claim 8, wherein the resetting of at least one setting (104, 204) of the electronic device (100, 200) to a factory default value (106, 206) is performed if a show room activation input element (210) of the electronic device (100, 200) is activated.

10. Method according to claim 9, wherein the show room activation input element (210) comprises a user input and/or a password input field.

11. Method according to any one of claims 9 and 10, wherein the show room activation input element (210) comprises a wireless transceiver, especially a WIFI transceiver and/or a Bluetooth transceiver, and wherein the show room activation input element (210) is activated if a predetermined communication partner is available for communication via the wireless transceiver.

12. Method according to any one of the preceding claims 8 to 11, wherein the at least one setting (104, 204) of the electronic device (100, 200) comprises a display brightness and/or a volume and/or an equalizer configuration and/or an activation state of a data interface, especially a wireless interface and/or wireless network information and/or wireless pairing information and/or a display resolution and/or a display size setting.

13. Method according to any one of the preceding claims 8 to 12, comprising deleting the content of a content memory (211) for user generated content (212) of the electronic device (100, 200) when performing resetting at least one setting (104, 204) of the electronic device (100, 200) to a factory default value (106, 206).

14. Method according to any one of the preceding claims 8 to 13, wherein resetting at least one setting (104, 204) of the electronic device (100, 200) to a factory default value (106, 206) is performed on activation of a reset input (213) of the electronic device (100, 200).
